# NOUVEAU FASCICULE DE BREVET EUROPEEN

(11) **EP 2 262 744 B2**
(45) Date de publication et mention de la décision concernant l'opposition: **28.12.2022**
(45) Mention de la délivrance du brevet: 08.01.2020
(21) Numéro de dépôt: 09722103.0
(22) Date de dépôt: 20.03.2009
(51) Int. Cl.: C03C 17/23, C03C 17/36

(54) **VITRAGE REVÊTU DE COUCHES MINCES**
VERGLASUNG MIT DÜNNSCHICHTBESCHICHTUNG
WINDOW COATED WITH THIN LAYERS

(30) Priorité: 20.03.2008 EP 08102817
(43) Date de publication de la demande: 22.12.2010
(60) Demande divisionnaire: 19218871.2
(73) Titulaire: AGC Glass Europe, 1170 Bruxelles (Watermael-Boitsfort) (BE)
(72) Inventeur: DI STEFANO, Gaëtan, B-6040 Jumet (BE)
(74) Mandataire: AGC Glass Europe
(86) Numéro de dépôt international: PCT/EP2009/053291
(87) Numéro de publication internationale: WO 2009/115596

(56) Documents cités:
- EP-A- 0 922 681
- WO-A-02/42234
- WO-A-2004/013059
- WO-A1-2006/048463
- WO-A2-2007/110552
- DE-B3- 10 333 619
- US-A- 5 514 485
- US-A1- 2003 143 401
- US-A1- 2004 241 490
- US-A1- 2006 134 436

## Description

La présente invention concerne des vitrages comprenant un ensemble de couches minces conférant des propriétés antisolaires ou bas-émissives, et susceptibles de supporter des traitements thermiques de type bombage/trempe.

Les revêtements les plus usuels pour les vitrages en question, sont réalisés par des techniques de dépôt sous vide assisté par magnétron, dits "magnetron sputtering".

Les systèmes de couches déposés par ce moyen permettent d'atteindre des performances remarquables tant dans les caractéristiques thermiques que dans les aspects optiques. Ils peuvent présenter notamment une très grande sélectivité, autrement dit constituer de puissants filtres pour les rayons infrarouges, tout en laissant passer les longueurs d'ondes visibles. Ils peuvent dans les meilleures conditions offrir une parfaite neutralité en réflexion, évitant notamment les colorations non-souhaitées.

Au-delà des qualités recherchées, les vitrages en question doivent présenter encore une résistance suffisante aux diverses agressions auxquelles ils sont susceptibles d'être exposés. Il s'agit bien notamment des agressions chimiques : air, eau, brouillards salins..., mais aussi mécaniques auxquelles ils sont soumis au cours des transports ou transformations lors de leur mise en œuvre.

Les vitrages sont par ailleurs soumis à des transformations telles que la trempe ou le bombage, qui impliquent des traitements thermiques à des températures comprises entre 550 et 700°C. Les systèmes de couches de ces vitrages doivent être peu ou pas sensibles à ces traitements, autrement dit, leurs caractéristiques doivent rester sensiblement inchangées. Surtout les vitrages doivent rester sans défaut qui modifierait soit les caractéristiques optiques, notamment la transparence, soit leur apparence par la formation par exemple de tâches ou d'irisations.

Les vitrages présentant ces propriétés antisolaires et/ou basse-émissives comportent systématiquement un ensemble de couches dites fonctionnelles réfléchissant les infrarouges, et de couches diélectriques qui protègent les premières et minimisent la réflexion des longueurs d'onde du visible.

Parmi les couches de protection, les plus externes doivent notamment conférer à ces systèmes les propriétés de résistance chimique et mécanique dont il a été question plus haut, bien entendu en n'altérant pas les autres propriétés. A titre indicatif, des couches pourtant réputées pour leur résistance mécanique, notamment certains carbures comme ceux de titane ou de zirconium sont trop absorbants pour pouvoir être utilisés même sous de très faibles épaisseurs.

Différentes propositions antérieures ont répondu au moins partiellement aux exigences attachées à ces couches superficielles dites aussi « top-coat ». Parmi les couches les plus utilisées figurent notamment les couches d'oxyde de titane, celles d'oxyde d'étain, celles de silice, des nitrures ou oxynitrures et notamment ceux de silicium et/ou Al. A l'expérience les couches d'oxyde de titane ou d'oxyde d'étain sont trop sensibles au traitement thermique. Les nitrures de titane, les oxy-nitrures de zirconium notamment, supportent bien les traitements thermiques en ce sens qu'ils offrent après traitement les caractéristiques requises. Néanmoins ces couches présentent des variations sensibles de transmission lumineuse avant et après traitement, qui font que les vitrages non traités ne peuvent être placés à côté d'autres qui ne le sont pas.

Des couches superficielles, permettant de combiner les vitrages avant et après traitement thermiques ont été proposés. Il s'agit notamment de la silice et des nitrures de silicium. Le dépôt de silice est très délicat, et les couches de nitrures de silicium ne présentent qu'une résistance insuffisante aux rayures. Les publications EP 0 922681 et WO 2004/013059 soulignent les difficultés de parvenir à des ensembles satisfaisants.

L'invention propose des couches superficielles pour ces systèmes antisolaires et/ou bas-émissifs comprenant au moins une couche fonctionnelle à base d'argent et un ensemble de couches diélectriques disposées entre un substrat verrier et la première couche d'argent, le cas échéant entre chaque couche d'argent et au-dessus de la couche la plus distante du substrat, qui offrent un ensemble de propriétés améliorées par rapport à celles des systèmes antérieurs, conformément aux revendications 1 à 13.

L'invention propose de disposer en couche superficielle une couche à base d'oxyde de titane et d'au moins un autre oxyde métallique de dureté élevée du groupe comprenant : ZrO₂, SiO₂, Cr₂O₃.

Les proportions respectives d'oxyde de titane et des autres métaux peuvent recouvrir une large gamme. Pour que l'effet soit sensible le ou les oxydes additionnels doivent représenter au moins 5% en poids de l'ensemble et de préférence au moins 10% en poids.

Dans l'oxyde mixte, l'oxyde de titane est présent au moins à 40% en poids, et de préférence au moins à 50% en poids.

De manière particulièrement préférée l'oxyde de titane représente au moins 55% en poids.

Dans les oxydes mixtes utilisés selon l'invention en plus de l'oxyde de titane, l'oxyde de zirconium est particulièrement préféré en raison de sa dureté très élevée. Il est avantageusement présent à raison de 15 à 50% en poids de la couche superficielle.

En dehors des oxydes de titane et des métaux énumérés ci-dessus, la couche superficielle selon l'invention peut encore contenir des oxydes supplémentaires pratiquement indissociables des oxydes précédents. C'est le cas en particulier des lanthanides comme l'oxyde d'yttrium ou celui de hafnium. Lorsque ces oxydes additionnels sont présents, leur teneur reste relativement limitée et ne dépasse pas 8% en poids de l'ensemble et le plus souvent reste inférieure à 5%.

Pour jouer convenablement son rôle de protection la couche superficielle doit présenter une certaine épaisseur. Cependant si cette couche n'est disposée que pour les propriétés mécaniques qu'elle confère au système de couches, une épaisseur relativement modeste peut suffire. L'épaisseur de cette couche à base d'oxyde de titane n'est pas inférieure à 3 nm.

Compte tenu de ce que les oxydes qui entrent dans la composition de cette couche superficielle sont bien transparents, il est possible d'utiliser des couches beaucoup plus épaisses que ne le nécessiterait l'amélioration de la résistance. Il est possible notamment d'utiliser cette couche de protection comme élément du filtre interférentiel, autrement dit comme couche participant de façon significative au maintient d'une transmission visible élevée et à l'établissement d'une bonne neutralité en réflexion.

La couche superficielle utilisée comme élément du filtre interférentiel est avantageusement combinée à d'autres couches diélectriques. Le choix de l'ensemble tient compte alors non seulement des propriétés optiques ou structurelles des différentes couches (indice, transparence, structure cristalline, qualité des interfaces), mais aussi de la commodité relative de la formation de ces couches.

Quelle que soit la structure considérée, en pratique la couche superficielle à base d'oxyde de titane reste d'épaisseur au plus égale à 35 nm.

Les systèmes de couches selon l'invention comprennent plusieurs couches superficielles de protection. A la couche à base d'oxyde de titane, peuvent être associées d'autres couches dont le but est encore d'améliorer la résistance au traitement thermique. Des couches de ce type située sous la couche à base d'oxyde de titane sont notamment les couches de titane métallique, lesquelles s'oxydent au cours de ce traitement thermique. Il peut s'agir encore de couches de nitrure de titane, de Zr ou de nitrure de Zr, de TiZr ou de nitrure de TiZr, soit une couche d'oxyde mixte d'étain et de zinc à environ 50% en poids de chacun des oxydes, soit, immédiatement sous la couche ladite couche à base d'oxyde de titane, d'une couche de nitrure de silicium ou d'oxy-nitrure de silicium, discutées ci-dessous.

Les couches superficielles selon l'invention qui confèrent notamment de très bonnes propriétés mécaniques sont aussi avantageusement combinées avec des couches offrant une grande résistance aux agents chimiques. Des couches de ce type sont notamment des couches de nitrure de silicium et oxynitrure de silicium (éventuellement avec de l'aluminium présent dans les cathodes comme dopant). Ces couches se situent immédiatement sous la ou les couches superficielles protectrices et notamment celle à base d'oxyde de titane. Ces couches supplémentaires présentent une épaisseur qui peut également être relativement modeste, de l'ordre de quelques nanomètres.

Les couches superficielles selon l'invention sont peu, ou pas sensibles aux traitements thermiques de bombage ou de trempe. Soumises à une température d'au moins 550°C pendant 5 mn et pour une épaisseur de 20 nm, leur transmission lumineuse ne varie de plus de 0,1%. A titre indicatif un vitrage analogue revêtu d'une couche mécaniquement résistante de TiN développe dans les mêmes conditions un voile important.

Les vitrages revêtus selon l'invention présentent avantageusement une résistance aux rayures selon la méthode faisant l'objet de la norme ASTM 2486D, qui n'est pas supérieure à 30%, et de préférence pas supérieure à 20%, dans une échelle allant de 0 à 100%, 100% correspondant à un vitrage entièrement rayé.

Les vitrages revêtus selon l'invention offrent encore une très bonne résistance aux tests d'humidité. Soumis au test "Cleveland" selon la norme ISO 6270, et pendant 3 jours, le niveau atteint est avantageusement d'au moins 3 sur une échelle allant de 1 à 5, 5 correspondant à un vitrage parfaitement sans défaut. Pour les échantillons soumis au test de pulvérisation saline selon la norme EN 1096 le résultat est avantageusement supérieur à 3 après 2 jours d'exposition.

Des systèmes comportant les « top-coat » selon l'invention répondent notamment aux structures suivantes :
- verre/ couche de blocage/ couche de nucleation / Ag / barriere / dielectric / top coat.
- verre/ couche de blocage/ couche de nucleation / Ag / barriere / dielectric / couche de nucleation / Ag / barriere / dielectric / top coat.
- verre/ couche de blocage/ couche de nucleation / Ag / barriere / dielectric / couche de nucleation / Ag / barriere / dielectric couche de nucleation / Ag / barriere / dielectric // top coat.

L'invention est décrite de façon détaillée dans les exemples suivants qui font également l'objet des figures annexées dans lesquelles :
- la figure 1 est une représentation schématique d'une coupe d'un vitrage revêtu d'un système de couches de comparaison;
- la figure 2 représente un système de couches analogue, selon l'invention ;
- la figure 3 est un graphique représentant l'absorption lumineuse en fonction de la longueur d'onde pour des monocouches d'oxydes utilisés selon l'invention ;
- la figure 4 est analogue à la précédente à une échelle plus détaillée.

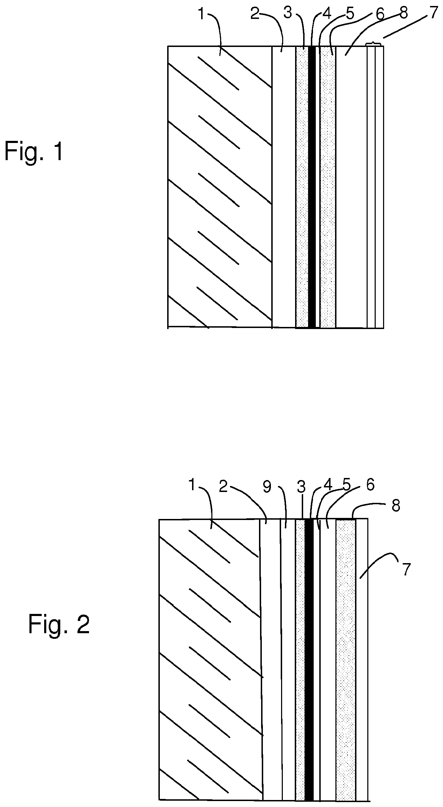

Le vitrage à la figure 1 est présenté en coupe sans respecter les proportions des différents éléments par souci de clarté. La feuille de verre 1 est revêtue d'un ensemble de couches comprenant une couche 4 à base d'argent réfléchissant les infrarouges. Cette couche d'argent est disposée entre deux ensembles de couches diélectriques qui la protègent et lui confèrent une bonne transmission lumineuse avec une bonne neutralité en réflexion.

La couche d'argent 4 est avantageusement déposée sur une couche 3 à base d'oxyde de zinc. Les couches d'oxyde de zinc, et celles à base d'oxyde de zinc dopé, sont connues pour favoriser la formation d'une bonne interface avec les couches d'argent, sans rugosité. Elles améliorent globalement les propriétés de ces dernières. Pour une même quantité d'argent par unité de surface la conduction et par suite l'émissivité des couches sont améliorées lorsqu'elles sont déposées de cette façon. Il peut s'agir d'oxyde de zinc seul sous faible épaisseur, épaisseur qui n'est pas supérieure à 15 nm.

Lorsque l'épaisseur d'oxyde de zinc est plus importante, le risque est de développer une croissance colonnaire laquelle conduit à une interface moins régulière avec une rugosité accrue. Pour éviter ce type de croissance il est connu de doper l'oxyde de zinc avec d'autres oxydes notamment de l'oxyde d'étain, d'aluminium ou de gallium.

Les couches constituées d'oxyde mixte zinc et étain sont traditionnellement de deux types. Les couches sur lesquelles les couches d'argent sont déposées sont avantageusement à faible teneur en oxyde d'étain, notamment de l'ordre de 10% en poids. Ces couches comme indiqué précédemment sont relativement peu épaisses et ne dépassent pas 15 nm. Le second type de couches d'oxyde mixte de zinc et d'étain est utilisé pour constituer dans les ensembles diélectriques la part principale du chemin optique pour les effets dé-réfléchissants. Dans cette fonction la ou les couches en question ont d'ordinaire des épaisseurs de plusieurs dizaines de nanomètres. De façon typique, des couches de ce type sont constituées à partir d'un oxyde mixte à 50% en poids environ de chacun des oxydes de zinc et d'étain. Ces couches présentent l'avantage d'une grande stabilité en particulier lors des traitements thermiques auxquels peuvent être soumis les vitrages.

Dans l'exemple représenté à la figure 1, une couche protectrice 5 est déposée au dessus de la couche d'argent 4. Il s'agit d'une couche traditionnelle qui a pour but de protéger la couche d'argent contre les altérations qui pourraient l'affecter particulièrement au cours des dépôts ultérieurs, notamment lorsque ces dépôts sont réalisés selon un mode réactif par exemple en atmosphère oxydante. La couche 5 est dite "barrière" ou encore "sacrificielle" lorsqu'elle intervient en réagissant avec l'atmosphère qui en l'absence de cette couche serait susceptible de réagir avec la couche d'argent.

Ces couches sacrificielles sont de très faibles épaisseurs. Elles ne sont pas de plus de 6 nm, et de préférence leur épaisseur est de 2 ou 3 nm. Elles sont constituées traditionnellement à base d'oxyde notamment de titane ou d'oxyde mixte de NiCr, d'oxyde de zirconium, l'oxyde de titane offrant l'avantage d'une très grande transparence. Etant déposées pour pouvoir réagir en protégeant l'argent, elles sont souvent formées à partir des métaux correspondant, et oxydées dans la suite de la constitution de l'empilage. Pour cette raison ces couches sont souvent sous-stoechiométriques. Il est aussi possible de les déposer à partir de cibles céramiques elles mêmes sous-stoechiométriques. Cette façon de procéder permet d'atteindre plus commodément une bonne oxydation voisine de la stoechiométrie dans la couche finale. De cette manière le coefficient d'extinction de la couche est réduit au mieux.

A la figure 1 les couches 2, 6 et 8, sont des couches entrant dans la constitution du filtre. Elles permettent d'éviter la réflexion de la majeure partie des rayons du domaine du visible. Grâce à ces couches on règle aussi la coloration de la lumière transmise et surtout de celle réfléchie, étant connu que dans la grande majorité des applications l'on s'efforce pour cette dernière de faire en sorte que cette lumière soit aussi faible et aussi neutre que possible.

Les couches diélectriques traditionnelles sont principalement constituées des oxydes de : Zn, Sn, Ti, Al, Zr, Nb. Leur épaisseur est fonction de leur indice et des chemins optiques requis, eux-mêmes dépendant de l'épaisseur de la couche réfléchissant les infrarouges. Les relations entre ces grandeurs sont parfaitement établies et donnent lieu le plus souvent à des déterminations au moyen de programmes spécialisés. Partant des valeurs ainsi déterminées, les ajustements ultérieurs sont effectués pour tenir compte des écarts qui peuvent exister entre les caractéristiques effectives de structure de composition ou de configuration, et celles correspondantes des couches idéales.

La couche superficielle 7 est une couche superficielle de protection contre les agressions mécaniques.

Selon l'invention (figure 2) la couche 7 est à base d'oxyde de titane comprenant un oxyde de dureté élevée (ZrO₂, SiO₂, Cr_{é}O₃).

L'exemple comparatif est représenté à la figure 1. Dans cet exemple la couche superficielle est constituée par le nitrure de titane, ou encore par une couche de nitrure de titane revêtue d'une couche de graphite.

Une série d'essais est conduite sur des produits trempables, autrement dit des produits dont les propriétés optiques et opto-énergétiques (transmission lumineuse, émissivité, coloration...) résistent à des traitements thermiques à des températures élevées.

Les qualités de produits selon l'invention sont comparées à celles des produits analogues dont les couches superficielles ne répondent pas aux conditions de l'invention.

Les structures suivantes sont réalisées :

| | ZSO5 | ZSO9 | Ag | TiOx | ZSO9 | ZSO5 | TiN | C |
|---|---|---|---|---|---|---|---|---|
| Ex.com1 | 250 | 100 | 95 | 50 | 100 | 250 | 35 | |
| Ex.com2 | 250 | 100 | 95 | 50 | 100 | 250 | 35 | 30 |
| couche | 2 | 3 | 4 | 5 | 6 | 8 | 7 | 7 |

| | ZSO5 | TiZrOx | ZnO-Al | Ag | TiOx | ZSO9 | ZSO5 | TiZrOx |
|---|---|---|---|---|---|---|---|---|
| Ex. 1 | 180 | 100 | 80 | 120 | 50 | 80 | 235 | 100 |
| Ex. 2 | 180 | 100 | 80 | 120 | 50 | 80 | 235 | 50 |
| couche | 2 | 9 | 3 | 4 | 5 | 6 | 8 | 7 |

Dans ces tableaux les significations des abréviations sont :
- ZSO5 est un oxyde mixte de zinc et d'étain à 50% en poids de chaque constituant ;
- ZSO9 désigne une couche d'oxyde de zinc dopée à 10% en poids d'oxyde d'étain ;
- TiOx est un oxyde de titane sous-oxydé ;
- TiZrOx est un oxyde de titane mixte comprenant en poids 50% de TiO₂, 46% de ZrO₂, le reste étant constitué d'éléments accompagnant habituellement le zirconium, notamment de l'oxyde Y₂O₅; cet oxyde peut être stoechiometrique ou sous stoechiometrique ;
- ZnO-Al est un oxyde de zinc dopé à l'aluminium avec une teneur de 5% en aluminium ;
- TiN est le nitrure de titane ;
- C est une couche de graphite obtenue par formation à partir d'une cathode de graphite en atmosphère inerte.

Les structures selon l'invention se distinguent des exemples des produits antérieurs par la nature de la couche superficielle. Les couches de nitrure de titane sont traditionnelles. Le revêtement de graphite ajoute à la résistance mécanique en évitant le contact avec les couches sous-jacentes par une sorte de "lubrification". Selon l'invention ces couches sont remplacées par l'oxyde de titane comprenant une part importante d'oxyde de zirconium.

Les essais de résistance à la rayure, effectués selon la norme ASTM 2486D, conduisent aux résultats suivants.

Les taux de rayures pour les exemples comparatifs 1 et 2 sont respectivement de 40% et 10%. Pour l'exemple 2 la présence de la couche de carbone améliore sensiblement le résultat mais complique la production. En plus elle doit impérativement être "brûlée" au cours du traitement thermique auquel est soumis le vitrage pour ne pas altérer la transmission lumineuse.

Les structures selon l'invention présentent respectivement pour les exemples 1 et 2 un taux de rayures de 10% et 5%. En d'autres termes, les produits sont au moins aussi résistants que les meilleurs produits antérieurs et de surcroît, offrent une bonne transmission lumineuse.

D'autres essais hors invention sont effectués avec des couches superficielles à base d'oxyde mixte de titane et de silicium (TiOx-Si). Le taux d'oxyde de silicium est de 8% en poids. Le dépôt de ces couches est effectué soit dans un gaz neutre (Ar) soit dans un mélange de gaz neutre et d'oxygène comportant 7% d'oxygène. Ces structures sont encore essayées à différentes épaisseurs pour la couche superficielle (30, 80 et 130 Å).

La structure des systèmes de couches est analogue à celle de l'exemple 1 précédent.

| TiO₂ | ZSO9 | Ag | TiOx | ZSO9 | TiOx-Si |
|---|---|---|---|---|---|
| 180 | 60 | 120 | 20 | 210 | |

TiO₂ est déposé dans des conditions qui conduisent à un oxyde pratiquement stoechiométrique. Les combinaisons suivantes sont réalisées et les propriétés indiquées pour la résistance aux rayures à la brosse sèche, et au test chimique de type "Cleveland".

Tous les essais "Cleveland" montrent une très bonne résistance. Les notations se situent toutes à 4 ou plus sur l'échelle de 1 à 5. La résistance à la brosse montre les résultats suivants en pourcentage de rayures :

| | O₂% | Epaisseur Å | résistance |
|---|---|---|---|
| TiOx-Si (8% Si) | 0 | 30 | |
| | | 80 | 90 |
| | | 130 | 90 |
| | 7 | 30 | 30 |
| | | 80 | 20 |
| | | 130 | 10 |

Les résistances à l'abrasion montrent une progression manifeste pour les couches déposées en atmosphère contenant de l'oxygène. Cette amélioration est particulièrement sensible dans le cas de l'oxyde mixte au silicium. Cette résistance à la rayure dépend aussi, de manière un peu moindre, de l'épaisseur de la couche. Dans l'ensemble l'oxyde mixte avec l'aluminium est plus résistant mécaniquement.

L'utilisation de couches de carbone pour leurs qualités anti-abrasives comme protection des systèmes de couches est connu. L'utilisation de ces couches de carbone vise particulièrement la protection pendant les processus de production de transport et de stockage. La présence de ces couches, même celles de faible épaisseur occasionne normalement une altération de la transmission lumineuse. L'épaisseur de ces couches ne dépasse pas ordinairement 15 nm et de préférence pas 10 nm. Pour cette raison ces couches sont généralement utilisées de manière temporaire. Elles sont éliminées pour rétablir le système de couches sous-jacent. Différentes méthodes peuvent être utilisées pour éliminer la couche de carbone. Pour obtenir un enlèvement complet les techniques les plus efficaces correspondent à l'élimination par oxydation à température élevée. Les systèmes de couches selon l'invention étant conçus pour pouvoir résister aux températures élevées se prêtent donc particulièrement bien à une protection supplémentaire au moyen d'une couche de carbone.

Des échantillons sont préparés qui reproduisent les structures des exemples comparatifs 1 et 2, à l'exception de leur couche 7. Dans les exemples comparatifs cette couche est de TiN et de TiN revêtue de carbone Dans l'exemple selon l'invention la couche 7 est constituée de l'oxyde mixte titane-zirconium et cette même couche revêtue de carbone. Les structures sont (épaisseurs toujours en Angström):

| | ZSO5 | ZSO9 | Ag | TiOx | ZSO9 | ZSO5 | TiN ou TiZrOx | C |
|---|---|---|---|---|---|---|---|---|
| Ex.com1 | 250 | 100 | 95 | 50 | 100 | 250 | 35 | |
| Ex.com2 | 250 | 100 | 95 | 50 | 100 | 250 | 35 | 30 |
| Ex.3 | 250 | 100 | 95 | 50 | 100 | 250 | 35 | |
| Ex.4 | 250 | 100 | 95 | 50 | 100 | 250 | 35 | 30 |
| couche | 2 | 3 | 4 | 5 | 6 | 8 | 7 | 7 |

Les essais de résistance à la rayure sont reportés précédemment pour les exemples comparatifs (40 et 10%). Pour les deux échantillons selon l'invention, les taux de rayures constatés sont respectivement d'environ 10 et 5%. Dans les deux séries on constate donc bien l'amélioration procurée par la présence de la couche de carbone. De même à structure identique la présence de la couche superficielle à base d'oxyde mixte de titane et zirconium est plus résistante.

Les échantillons précédents ont été soumis à une série de tests de résistance.

Le premier essai est suivant la résistance à la condensation suivant la méthode dite "Cleveland" qui fait l'objet de la norme ISO 6270. Selon ce test les échantillons sont maintenus dans une atmosphère saturée d'humidité à température constante pendant plusieurs jours. On note l'apparition éventuelle de défauts et leur densité. Le test est considéré comme réussi lorsque le niveau atteint après 1 jour est de 4 sur une échelle allant de 1 à 5, 5, correspondant à un échantillon sans défaut.

Un essai est effectué aussi en chambre climatique. Il s'agit également d'un essai de résistance à la condensation. Dans ce test la température passe de 45 à 55°C alternativement chaque fois pendant 1 heure. L'atmosphère est aussi saturée en humidité. Comme précédemment le résultat est bon lorsque le niveau après 3 jours est au moins de 3 sur l'échelle de 1 à 5.

Le test de la pulvérisation saline est effectué selon la norme EN1096. L'échantillon dans ce cas est satisfaisant lorsque le niveau est au moins de 2,5 après 2 jours toujours sur l'échelle arbitraire de 1 à 5.

La résistance aux UV est déterminée par exposition de manière accélérée. Le niveau est satisfaisant s'il est d'au moins 3.

Les résultats obtenus sont reportés dans le tableau suivant :

| | Cleveland 3j. | Ch. clim 3j. | Sprays 2j. | UV |
|---|---|---|---|---|
| Ex. com. 1 | 3,5 | 3,5 | 3,75 | 3,5 |
| Exemple 3 | 4 | 4 | 4,25 | 4 |
| Ex. com. 2 | 3,5 | 3,5 | 2,75 | 4 |
| Exemple 4 | 4,25 | 4,25 | 4 | 4 |

Par rapport aux échantillons de référence les structures selon l'invention se comportent au moins aussi bien, et sont particulièrement résistantes aux tests de résistances à l'humidité.

Une autre série d'essais est effectuée avec sous la couche protectrice à base d'oxyde de titane, une couche de titane ou de nitrure de titane. La structure du système de couches est le suivant (épaisseurs en Angstöms):
Verre/ ZSO5(190)/TiZrOx(140)/ZSO9(50)/Ag(130)/Ti(50)/ZSO5(240)/ top-coat

La couche protectrice "top-coat" est constituée selon les échantillons de la manière suivante :

| | | | | |
|---|---|---|---|---|
| Ex. com. 3 | TiN | 32 | | |
| Ex. com. 4 | TiN | 32 | C | |
| Ex. 5 | Ti | 27 | TiZrOx | 30 |
| Ex. 6 | Ti | 30 | TiZrOx | 30 |
| Ex. 7 | Ti | 27 | TiZrO | 30 |
| Ex. 8 | Ti | 27 | TiZrO | 30 |
| Ex. 9 | TiN | 24 | TiZrO | 30 |
| Ex. 10 | TiN | 24 | TiZrOx | 30 |

Les notations sont les mêmes qu'aux exemples précédents. Dans ces notations, Ti désigne une couche de titane déposée à partir d'une cible métallique en atmosphère de gaz neutre. Dans ces conditions la couche constituée est essentiellement métallique. Elle est destinée à s'oxyder lors du traitement thermique ultérieur auquel le vitrage est soumis. TiZrOx désigne une couche déposée à partir d'une cible céramique sous-oxydée, en atmosphère exempte également d'oxygène. Dans ces conditions la couche formée demeure également légèrement sous oxydée avant le traitement thermique. TiZrO désigne des couches produites à partir du même type de cibles mais dans une atmosphère composée d'un mélange argon-oxygène à 8% d'oxygène. Dans ces conditions la couche formée est pratiquement stoechiométrique.

Les échantillons sont soumis à une opération de trempe après maintien pendant 9 minutes à une température de 670°C. Les deux échantillons de comparaison présentent l'apparition d'un voile gênant. Les échantillons 5 à 10 selon l'invention sont pratiquement sans modification sensible après ce traitement thermique.

Les mêmes échantillons sont soumis à trois tests de résistance : au brouillard salin (EN1096), au "wet rub test" et à la rayure (ASTM2486D).

Le "wet rub test" est destiné à apprécier la résistance du système de couches à la délamination au frottement. L'échantillon est soumis au frottement d'un tissu de coton maintenu humide (eau déminéralisée) sous une charge. Le frottement en va-et-vient est effectué à une fréquence de 60 oscillations par minutes. Le mouvement est maintenu pendant un nombre de cycles usuellement de 500.

On observe l'évolution de la couche supérieure et si celle-ci est enlevée par ce frottement.

L'échantillon de comparaison 3 ne résiste pas suffisamment à l'usure mécanique dans les deux épreuves. L'échantillon de comparaison 4 ne satisfait pas à l'épreuve du brouillard salin.

Les échantillons 5 à 10 selon l'invention répondent quant à eux de façon satisfaisante à ces trois épreuves.

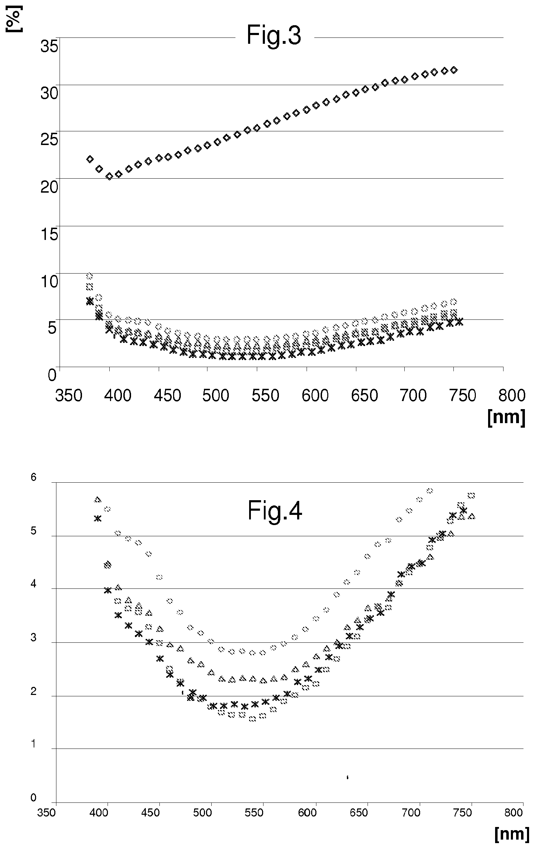

Les couches utilisées selon l'invention à base d'oxyde de titane comme couches superficielles protectrices ont encore l'avantage, en plus de leur résistance mécanique, d'être très transparentes aux longueurs d'onde visibles. Cette transparence est d'autant meilleure que l'oxydation de la couche est plus complète. Les figures 3 et 4 illustrent cette particularité.

Sur ces figures des séries de mesures d'absorption sont rapportées en fonction de la longueur d'onde. Les mesures sont faites sur des monocouches d'oxyde mixte de titane et de zirconium du même type que celles faisant l'objet des exemples précédents. Les couches sont déposées sur une feuille de verre clair de 4mm d'épaisseur.

La couche de TiZrOx est uniformément de 16 nm. Elle est déposée dans une atmosphère d'argon dont la teneur en oxygène est variable, sous une pression totale constante de 0,8 Pa.

Les dépôts sont effectués à partir d'une cible céramique comportant le mélange d'oxyde de titane et zirconium. Le débit d'oxygène est successivement nul (losange), puis de 1 (rond), 2,5 (triangle), 5 cm³ (carré) par Kw de puissance appliquée à la cathode. La cinquième mesure (étoile) correspond au dernier échantillon (5 cm³) ayant été soumis au traitement thermique 600°C pendant 3 mn.

Dans l'atmosphère d'argon seul l'absorption de la couche, figure 3, est très importante. Cette absorption correspond à l'existence de sous-stoechiométrie inhérente à la formation dans ce type d'atmosphère. Dès qu'un peu d'oxygène est introduit, l'aptitude du titane à réagir conduit rapidement à un comportement radicalement différent. L'absorption est réduite sensiblement. Le mélange d'oxyde tend vers la stoechiométrie.

A la figure 3 les différentes courbes sont très rapprochées. Pour distinguer les effets de la teneur en oxygène les résultats sont reportés à une autre échelle à la figure 4. On constate sur cette figure que l'absorption est globalement plus faible lorsque la teneur en oxygène est augmentée. On atteint cependant rapidement une limite. La courbe qui est présentée pour l'échantillon qui a subi un traitement thermique est pratiquement identique à celle de l'échantillon avant ce traitement. La couche est donc pratiquement stoechiométrique pour ces concentrations.

Outre les structures données dans les exemples précédents des structures avantageuses comportant les couches superficielles selon l'invention, c'est-à-dire les couches d'oxydes mixtes de titane et d'oxyde dur, et celles surmontées d'une couche supplémentaires de carbone, l'ensemble constituant une couche "top-coat" de protection, sont notamment :
- verre/TiO₂/ZnO/Ag/NiCr/SiAlN/top-coat
- verre/ZSO5/TiO₂/ZnO/Ag/barrière/SiAlON/top-coat
- verre/SiAlN/NiCr/Ag/NiCr/SiAlN/top-coat
- verre/SiAlN/ZnO/Ag/NiCr/SiAlN/top-coat
- verre/ZSO5/ZSO9/Ag/barrière/ZSO5/ZSO9/Ag/barrière/ZSO5/SiAl ON/top-coat.

Dans ces structures, hors la couche "top-coat", les autres couches sont utilisées dans les conditions usuelles de mise en œuvre et pour leur faire jouer leur fonction traditionnelle :
- NiCr comme couche sacrificielle ;
- SiAlON comme couche d'indice et de protection ;
- TiO₂ et SnO₂ comme couche d'indice ;
- ZnO comme couche d'indice mais aussi favorisant la croissance de la couche d'argent lorsqu'au contact de cette dernière et d'épaisseur relativement faible (moins de 10 nm).

## Revendications

1. Vitrage essentiellement transparent trempable comportant un système de couches minces déposées sous vide avec magnétron et présentant des propriétés antisolaires et/ou bas-émissives comprenant au moins une couche fonctionnelle à base d'argent et un ensemble de couches diélectriques disposées entre un substrat verrier et la première couche d'argent, le cas échéant entre chaque couche d'argent et au-dessus de la couche la plus distante du substrat, et comportant comme couche superficielle protectrice une couche à base d'oxyde de titane et d'au moins un autre oxyde métallique de dureté élevée du groupe comprenant : ZrO₂, SiO₂, Cr₂O₃, et dans lequel la couche superficielle à base d'oxyde de titane est appliquée
- soit sur une première couche protectrice constituée de titane métallique, ou de nitrure de titane, de Zr ou de nitrure de Zr, de TiZr ou de nitrure de TiZr,
- soit sur une couche d'oxyde mixte d'étain et de zinc à environ 50% en poids de chacun des oxydes,
- soit immédiatement sur une couche de nitrure de silicium ou d'oxy-nitrure de silicium
et dans lequel la couche superficielle à base d'oxyde de titane présente une épaisseur qui n'est pas inférieure à 3 nm.

2. Vitrage selon la revendication 1 dans lequel le ou les oxydes métalliques hors l'oxyde de titane de la couche superficielle représentent au moins 5% en poids de l'ensemble de la couche, et de préférence au moins 10% en poids.

3. Vitrage selon l'une des revendications précédentes dans lequel l'oxyde de titane représente au moins 40% en poids de la couche superficielle.

4. Vitrage selon l'une des revendications précédentes dans lequel, hors l'oxyde de titane, la couche superficielle contient de l'oxyde de zirconium à raison de 15 à 50% en poids.

5. Vitrage selon l'une des revendications 1 à 4 dans lequel la couche superficielle à base d'oxyde de titane présente une épaisseur qui n'est pas supérieure à 35 nm.

6. Vitrage selon l'une des revendications précédentes dans lequel la couche superficielle est elle-même revêtue d'une couche de carbone.

7. Vitrage selon la revendication 6 dans lequel la couche de carbone présente une épaisseur qui n'est pas supérieure à 30 nm et de préférence pas supérieure à 20 nm.

8. Vitrage selon la revendication 1 comprenant une, deux ou trois couches d'argent, chacune d'une épaisseur de 7 à 20 nm.

9. Vitrage selon la revendication 8 dans lequel chaque couche à base d'argent est revêtue d'une couche sacrificielle formée par un oxyde ou sous oxyde de Ti, Zr, Nb, NiCr.

10. Vitrage selon la revendication 8 ou la revendication 9 dans lequel la ou les couches d'argent sont déposées sur une couche à base d'oxyde de zinc éventuellement dopée d'oxyde d'étain, d'aluminium ou de gallium.

11. Procédé de préparation d'un vitrage selon l'une des revendications précédentes dans lequel la couche superficielle à base d'oxyde de titane comprenant un ou plusieurs oxydes additionnels améliorant sa résistance mécanique, est déposée par dépôt sous vide assisté par magnétron, à partir de cathodes comportant un mélange correspondant d'oxydes ou de sous oxydes.

12. Procédé selon la revendication 11 dans lequel le dépôt de la couche superficielle est effectué en atmosphère légèrement oxydante.

13. Vitrage selon l'une des revendications 1 à 5 dans lequel la couche superficielle dite aussi "top-coat", fait partie d'un système de couches du groupe comprenant :
verre/TiO₂/ZnO/Ag/NiCr/SiAlN/top-coat
verre/SiAlN/NiCr/Ag/NiCr/SiAlN/top-coat
verre/SiAlN/ZnO/Ag/NiCr/SiAlN/top-coat
les couches suivantes étant constituées de manière traditionnelle et pour jouer leur rôle habituel à savoir :
- NiCr comme couche sacrificielle ;
- SiAlN comme couche d'indice et de protection ;
- TiO₂ comme couche d'indice ;
- ZnO comme couche d'indice mais aussi favorisant la croissance de la couche d'argent lorsqu'au contact de cette dernière et d'épaisseur relativement faible, épaisseur qui n'est pas supérieure à 15nm.

## Patentansprüche

1. Härtbare, im Wesentlichen transparente Verglasung, die ein System von unter Vakuum mittels Magnetron abgeschiedenen Dünnschichten umfasst und Sonnenschutz- und/oder Niedrig-Emissionseigenschaften aufweist, umfassend mindestens eine Funktionsschicht auf der Basis von Silber und eine Gruppe dielektrischer Schichten, die zwischen einem Glassubstrat und der ersten Silberschicht, gegebenenfalls zwischen jeder Silberschicht und über der am weitesten vom Substrat entfernten Schicht angeordnet sind, und umfassend als Oberflächenschutzschicht eine Schicht auf der Basis von Titanoxid und mindestens einem anderen Metalloxid mit größerer Härte aus der Gruppe umfassend: ZrO₂, SiO₂, Cr₂O₃, und wobei die Oberflächenschicht auf der Basis von Titanoxid
- entweder auf eine aus Titan-Metall oder Titannitrid, Zr oder Zr-Nitrid, TiZr oder TiZr-Nitrid bestehende erste Schutzschicht
- oder auf eine Schicht aus gemischtem Zinn- und Zinkoxid zu etwa 50 Gew.-% jedes der Oxide
- oder unmittelbar auf eine Schicht aus Siliziumnitrid oder Siliziumoxynitrid
aufgebracht wird
und wobei die Oberflächenschicht auf der Basis von Titanoxid eine Dicke von nicht weniger als 3 nm aufweist.

2. Verglasung nach Anspruch 1, wobei das oder die Metalloxid(e) außer Titanoxid der Oberflächenschicht mindestens 5 Gew.-% der gesamten Schicht und vorzugsweise mindestens 10 Gew.-% ausmacht/ausmachen.

3. Verglasung nach einem der vorhergehenden Ansprüche, wobei das Titanoxid mindestens 40 Gew.-% der Oberflächenschicht ausmacht.

4. Verglasung nach einem der vorhergehenden Ansprüche, wobei die Oberflächenschicht außer Titanoxid Zirkonoxid zu 15 bis 50 Gew.-% enthält.

5. Verglasung nach einem der Ansprüche 1 bis 4, wobei die Oberflächenschicht auf der Basis von Titanoxid eine Dicke von nicht mehr als 35 nm aufweist.

6. Verglasung nach einem der vorhergehenden Ansprüche, wobei die Oberflächenschicht ihrerseits mit einer Kohlenstoffschicht beschichtet ist.

7. Verglasung nach Anspruch 6, wobei die Kohlenstoffschicht eine Dicke von nicht mehr als 30 nm und vorzugsweise von nicht mehr als 20 nm aufweist.

8. Verglasung nach Anspruch 1, umfassend eine, zwei oder drei Silberschichten, jeweils mit einer Dicke von 7 bis 20 nm.

9. Verglasung nach Anspruch 8, wobei jede Schicht auf der Basis von Silber mit einer Opferschicht beschichtet ist, die von einem Oxid oder Suboxid von Ti, Zr, Nb, NiCr gebildet wird.

10. Verglasung nach Anspruch 8 oder Anspruch 9, wobei die Silberschicht (en) auf eine Schicht auf der Basis von Zinkoxid, die gegebenenfalls mit Zinn-, Aluminium- oder Galliumoxid dotiert ist, aufgebracht ist(sind).

11. Verfahren zur Herstellung einer Verglasung nach einem der vorhergehenden Ansprüche, wobei die Oberflächenschicht auf der Basis von Titanoxid, die ein oder mehrere zusätzliche Oxide umfasst, das/die ihre mechanische Festigkeit verbessert/verbessern, mittels Magnetron-unterstützter Vakuumabscheidung von Kathoden, die ein entsprechendes Gemisch von Oxiden oder Suboxiden umfassen, abgeschieden wird.

12. Verfahren nach Anspruch 11, wobei das Abscheiden der Oberflächenschicht unter einer leicht oxidierenden Atmosphäre durchgeführt wird.

13. Verglasung nach einem der Ansprüche 1 bis 5, wobei die auch als "Top-Coat" bezeichnete Oberflächenschicht Teil eines Systems von Schichten aus der Gruppe ist, umfassend:
Glas/TiO₂/ZnO/Ag/NiCr/SiAlN/Top-Coat
Glas/SiAlN/NiCr/Ag/NiCr/SiAlN/Top-Coat
Glas/SiAlN/ZnO/Ag/NiCr/SiAlN/Top-Coat,
wobei die folgenden Schichten auf herkömmliche Weise hergestellt werden, damit sie ihre übliche Funktion erfüllen, nämlich:
- NiCr als Opferschicht;
- SiAlN als Index- und Schutzschicht;
- TiO₂ als Indexschicht;
- ZnO als Indexschicht, die jedoch auch das Wachstum der Silberschicht fördert, wenn sie mit Letzterer in Kontakt steht, und eine relativ kleine Dicke von nicht mehr als 15 nm besitzt.

## Claims

1. Essentially transparent temperable glazing comprising a system of thin layers deposited under vacuum by magnetron and having antisolar and/or low-emissivity properties, comprising at least one silver-based functional layer and a set of dielectric layers positioned between a glass substrate and the first silver layer, where appropriate between each silver layer, and above the layer furthest from the substrate, and comprising, as protective surface layer, a layer based on titanium oxide and on at least one other metal oxide of high hardness from the group comprising: ZrO₂, SiO₂, Cr₂O₃, and in which the surface layer based on titanium oxide is applied
- either to a first protective layer formed of titanium metal, or of titanium nitride, of Zr or of Zr nitride, of TiZr or of TiZr nitride,
- or to a layer of a mixed oxide of zinc and tin containing around 50% by weight of each of the oxides,
- or immediately to a layer of silicon nitride or of silicon oxynitride,
and in which the surface layer based on titanium oxide has a thickness which is not less than 3 nm.

2. Glazing according to Claim 1, in which the metal oxide(s), apart from the titanium oxide of the surface layer, represent at least 5% by weight and preferably at least 10% by weight of the whole layer.

3. Glazing according to either of the preceding claims, in which the titanium oxide represents at least 40% by weight of the surface layer.

4. Glazing according to one of the preceding claims, in which, apart from the titanium oxide, the surface layer contains zirconium oxide in a proportion of from 15% to 50% by weight.

5. Glazing according to one of Claims 1 to 4, in which the surface layer based on titanium oxide has a thickness which is not greater than 35 nm.

6. Glazing according to one of the preceding claims, in which the surface layer is itself coated with a layer of carbon.

7. Glazing according to Claim 6, in which the carbon layer has a thickness which is not greater than 30 nm and preferably not greater than 20 nm.

8. Glazing according to Claim 1, comprising one, two or three silver layers, each with a thickness of from 7 to 20 nm.

9. Glazing according to Claim 8, in which each silver-based layer is coated with a sacrificial layer formed by an oxide or suboxide of Ti, Zr, Nb, NiCr.

10. Glazing according to Claim 8 or Claim 9, in which the silver layer(s) are deposited on a layer based on zinc oxide optionally doped with tin oxide, aluminium or gallium.

11. Process for preparing a glazing according to one of the preceding claims, in which the surface layer based on titanium oxide comprising one or more additional oxides that improve its mechanical strength is deposited by magnetron-assisted vacuum deposition, from cathodes comprising a corresponding mixture of oxides or of suboxides.

12. Process according to Claim 11, in which the deposition of the surface layer is carried out in a slightly oxidizing atmosphere.

13. Glazing according to one of Claims 1 to 5, in which the surface layer also referred to as a "top coat" forms part of a system of layers of the group comprising:
glass/TiO₂/ZnO/Ag/NiCr/SiAlN/top coat
glass/SiAlN/NiCr/Ag/NiCr/SiAlN/top coat
glass/SiAlN/ZnO/Ag/NiCr/SiAlN/top coat
the following layers being formed in a conventional manner and in order to play their customary role, namely:
- NiCr as sacrificial layer;
- SiAlN as index layer and protective layer;
- TiO₂ as index layer;
- ZnO as index layer but also that promotes the growth of the silver layer when in contact therewith and is of relatively low thickness, which thickness is not greater than 15 nm.
